# FASCICULE DE BREVET EUROPEEN

(11) **EP 0 835 188 B1**
(45) Date de publication et mention de la délivrance du brevet: **15.09.1999**
(21) Numéro de dépôt: 96924907.7
(22) Date de dépôt: 01.07.1996
(51) Int. Cl.: B60B 27/02, B62M 9/12

(54) **DISPOSITIF D'ENTRAINEMENT A ROUE LIBRE, NOTAMMENT POUR UNE BICYCLETTE**
ANTRIEBSEINRICHTUNG MIT FREILAUF, INSBESONDERE FÜR EIN FAHRRAD
FREEWHEEL DRIVE DEVICE, PARTICULARLY FOR A BICYCLE

(30) Priorité: 30.06.1995 FR 9508156
(43) Date de publication de la demande: 15.04.1998
(73) Titulaire: Bollini, Jean, 38640 Claix (FR)
(72) Inventeur: BOLLINI, Jean, F-38640 Claix (FR)
(74) Mandataire: Hecké, Gérard
(86) Numéro de dépôt international: FR9601015
(87) Numéro de publication internationale: WO9702149

(56) Documents cités:
- EP-A- 0 191 710
- BE-A- 435 289
- DE-U- 8 909 765
- DE-U- 9 218 358
- DE-U- 9 408 910
- FR-A- 2 518 461
- FR-A- 2 618 101
- GB-A- 2 145 675

## Description

### Etat de la technique

L'invention est relative à un dispositif d'entraînement de la roue motrice d'un cycle, notamment une bicyclette, comprenant :
- un moyeu de support de la roue, lequel est agencé sur un tube fixe par l'intermédiaire de roulements pour constituer un deuxième sous-ensemble porté par une patte de fixation du cadre,
- une roue libre d'entraînement du moyeu, ladite roue libre étant formée par un corps annulaire monté coaxialement par rapport à l'axe du moyeu, et comportant sur la surface périphérique une série de pignons coopérant avec une chaîne de transmission, le corps de la roue libre étant monté sur une douille de support tubulaire par l'intermédiaire d'un roulement pour former un premier sous-ensemble solidarisé à l'autre patte de fixation du cadre,
- et des moyens d'assemblage du dispositif d'entraînement aux pattes de fixation du cadre. Un tel dispositif est connes par exemple du document DE-U-9218358.

Sur un vélo traditionnel, le moyeu de support de la roue, et la roue libre à pignons sont montés coaxialement sur un axe commun, dont les extrémités sont bloquées dans des lumières des pattes de fixation du châssis par des écrous de retenue, par exemple à papillons ou à excentrique. En cas de crevaison, le démontage d'une roue arrière nécessite le dévissage des écrous, suivi de l'enlèvement de la roue complète avec la roue libre, après avoir opéré au préalable la libération de la chaîne, et la détente du dérailleur. Ce montage connu du moyeu et de la roue libre sur le même axe n'est pas pratique en compétition, car, en cas de crevaison, le cycliste doit pouvoir disposer d'une roue de rechange ayant une roue libre avec les mêmes pignons convenant à sa morphologie et à sa puissance. Un autre inconvénient est la complexité du montage, car il nécessite la remise en place de la chaîne et du dérailleur.

Dans les courses professionnelles, chaque coureur choisit son développement propre correspondant à des pignons prédéterminés de la roue libre. Lorsque le leader d'une équipe doit changer la roue arrière de son vélo, un équipier lui donne sa roue, mais le leader est généralement obligé de rechanger cette roue, à cause du- développement qui ne lui convient pas.

Dans le dispositif décrit dans le document FR-A-2618101, la transmission entre la roue libre et le moyeu s'effectue par l'intermédiaire d'un cliquet de liaison destiné à se loger dans des alésages borgnes usinés dans le flasque. Pour démonter la roue arrière, il est indispensable de déverrouiller préablement le cliquet à l'aide d'un outil. Outre le problème d'usure du cliquet, la réalisation d'un tel dispositif est compliquée.

### Objet de l'invention

L'objet de l'invention consiste à pouvoir assurer facilement le démontage et le remplacement d'une roue arrière de bicyclette, en laissant en place la roue libre d'entraînement, et la chaîne de transmission, et sans détendre le dérailleur.

Le dispositif d'entraînement selon l'invention est caractérisé en ce que le corps de la roue libre est équipé d'un premier moyen de transmission coopérant par emmanchement démontable avec un deuxième moyen de transmission du moyeu pour accoupler ou désaccoupler la liaison mécanique entre la roue libre et le moyeu, respectivement lors du montage ou du démontage du deuxième sous-ensemble, les premier et deuxième moyens de transmission comportant des éléments de transmission mâle et femelle de formes conjuguées, et que course d'emmanchement, ou de désaccouplement effectue perpendiculairement à l'axe de la roue, et selon la direction des rainures des pattes de fixation et sans écartement desdites pattes. Les éléments de transmission mâle et femelle sont formés avantageusement par des tenons et glissières à sections en queue d'aronde.

Le démontage de la roue implique l'extraction préalable de la broche de maintien, suivi du désaccouplement de la liaison mécanique opéré par un simple mouvement de retrait, dont la course correspond à la longueur des rainures ménagées dans les pattes de fixation du cadre. Le deuxième sous-ensemble du moyeu est alors dissocié du premier sous-ensemble de la roue libre, qui reste en place sur la patte de fixation associée.

Selon une autre caractéristique de l'invention, le premier sous-ensemble comporte des moyens de positionnement radial et axial de la roue libre, respectivement par rapport à la douille de support, et à la face interne de la patte de fixation, et un écrou de blocage vissé sur la douille contre la face externe de la patte de fixation.

Les moyens de positionnement comportent :
- un écrou d'ajustage vissé sur la douille entre la face interne de la patte de fixation et le roulement,
- et un écrou de serrage coopérant avec le corps pour assurer à la fois le blocage axial du roulement en appui contre l'écrou d'ajustage, et le positionnement axial de l'extrémité de la douille du côté du premier moyen de transmission.

D'autres avantages et caractéristiques ressortiront plus clairement de la description qui va suivre d'un mode de réalisation de l'invention, donné à titre d'exemple non limitatif, et représenté aux dessins annexés, dans lesquels:

### Description des figures

- la figure 1 est une vue en coupe axiale du dispositif d'entraînement selon l'invention, représenté en position de montage final;
- la figure 2 est une vue partielle, à échelle agrandie, de la figure 1, montrant le sous-ensemble de support du moyeu, après le démontage de la broche de maintien;
- la figure 3 est une vue partielle, à échelle agrandie, de la figure 1, montrant l'autre sous-ensemble de support de la roue libre;
- la figure 4 est une vue en coupe après assemblage des deux sousensembles des figures 2 et 3, mais avant la mise en place de la broche de maintien;
- la figure 5 est une vue identique de la figure 1 d'une variante de réalisation;
- la figure 6 montre une vue selon la flèche 6 de la figure 5 montrant l'élément de transmission femelle en position désaccouplée;
- la figure 7 est une vue en coupe selon la ligne 7-7 de la figure 6;
- la figure 8 représente une vue selon la flèche 8 de la figure 5, montrant l'élément de transmission mâle en position désaccouplée;
- la figure 9 est une vue en coupe selon la ligne 9-9 de la figure 8.

### Description d'un mode de réalisation préférentiel

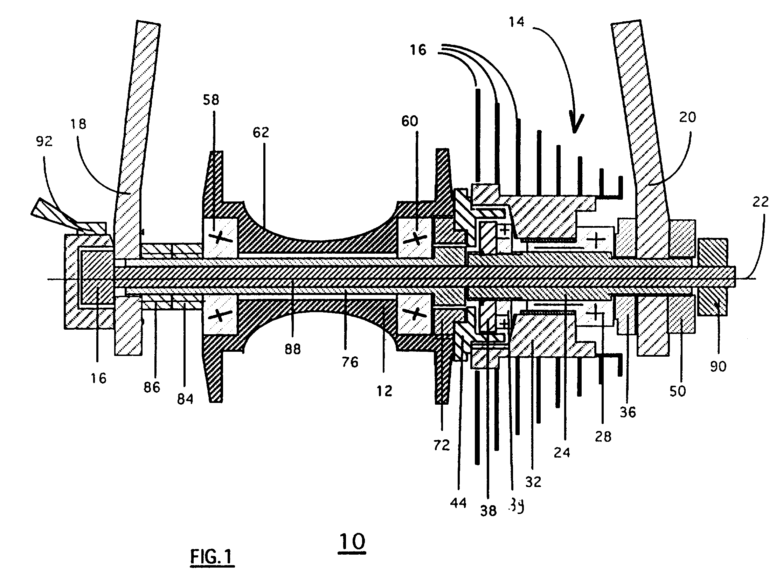

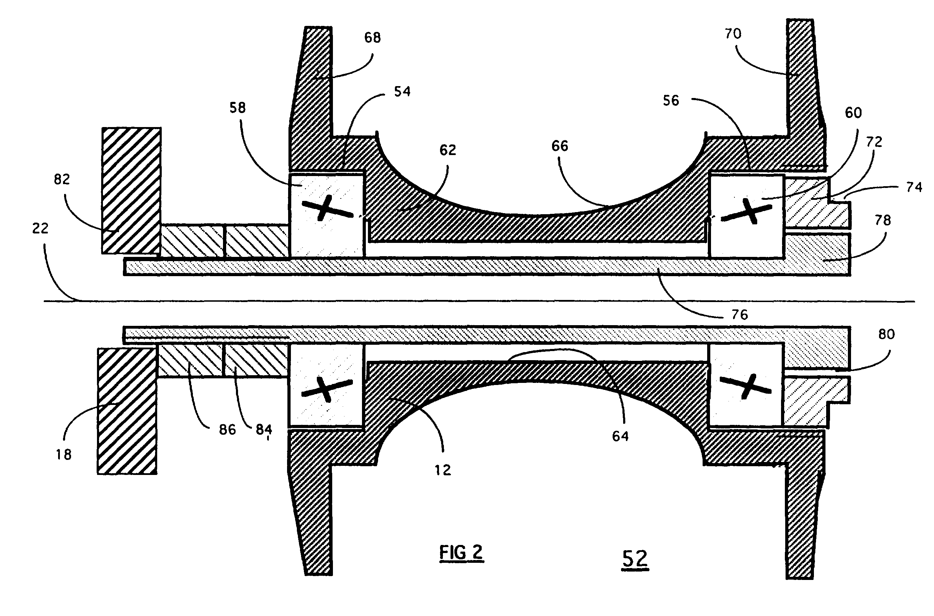

Sur les figures 1 à 4, un dispositif d'entraînement 10 de la roue arrière motrice d'un cycle, comporte un moyeu 12 de support de la roue, et une roue libre 14 d'entraînement du moyeu 12. La roue libre 14 est équipée d'une série de pignons 16 coaxiaux coopérant d'une manière classique avec une chaîne de transmission (non représentée), associée à un dérailleur pour le changement de la vitesse d'entraînement.

Le moyeu 12 et la roue libre 14 sont montés entre les deux pattes 18, 20 de fixation du châssis ou cadre, avec un alignement axial par rapport à l'axe transversal 22 de la roue. Chaque patte 18, 20 possède une rainure semiouverte de logement de l'extrémité de l'axe 22.

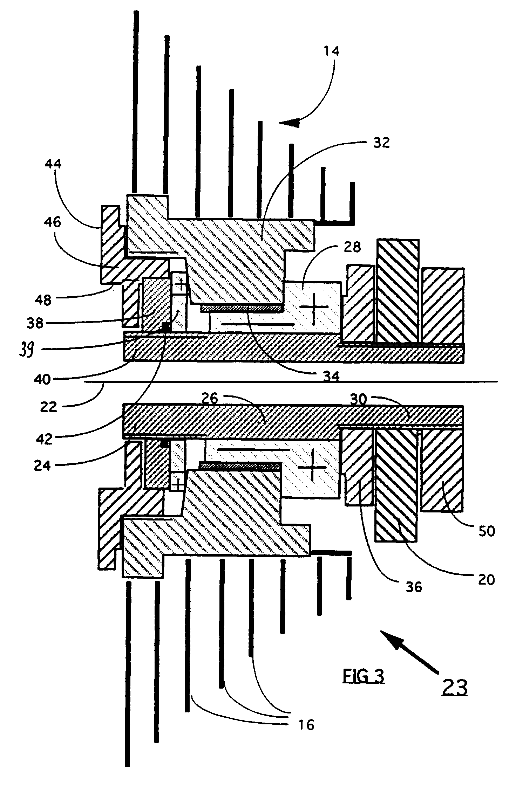

La roue libre d'entraînement 14 fait partie d'un premier sous-ensemble 23 représenté à la figure 3, et comprenant une douille de support 24 fixe de forme tubulaire, ayant une première portion 26 cylindrique sur laquelle est monté un roulement combiné à aiguilles 28, et une deuxième portion 30 cylindrique de blocage du premier sous-ensemble 23 sur la patte de fixation 20 de droite. La roue libre 14 comporte un corps 32 annulaire monté intérieurement sur le roulement 28, et portant coaxialement les pignons 16 le long de sa surface périphérique. Une bague 34 intermédiaire peut être intercalée entre le corps 32 et le roulement 28 pour assurer le rattrapage du jeu radial. Un écrou d'ajustage 36 coopère avec la partie filetée de la deuxième portion 30 de la douille 24 pour le rattrapage du jeu axial du roulement 28 par rapport à la face interne de la patte de fixation 20.

La douille 24 métallique est réalisée en acier, ayant une dureté prédéterminée adaptée à l'effet de roulement des aiguilles lors de la rotation du roulement 28 engendrée par la roue libre d'entraînement 14.

A l'opposé de l'écrou d'ajustage 36 se trouve un écrou de serrage 38 vissé sur la partie filetée de la première portion 26 de la douille 24, et coopérant avec une butée à aiguilles 39 en appui contre un épaulement du corps 32 pour assurer à la fois le blocage axial du roulement 28 en appui contre l'écrou d'ajustage 36, et le positionnement axial de l'extrémité 40 de la douille 24 du côté de la transmission. Un joint d'arrêt 42 est associé à l'écrou de serrage 38 pour provoquer l'immobilisation en rotation lorsque le réglage est effectué. La butée à aiguilles 39 est à simple effet, et est associée à une contre-plaque.

Un premier moyen de transmission 44 solidaire de la roue libre 14, est formé par un manchon d'accouplement 46 fixé par vissage au corps 32, en faisant saillie de la face frontale interne de la roue libre 14. Le manchon d'accouplement 46 est doté d'une glissière femelle 48 se trouvant en saillie par rapport à l'extrémité 40 de la douille 24.

Après la fixation du manchon d'accouplement 46, et des écrous 36, 38, le premier sous-ensemble 23 est opérationnel, et peut être monté sur la patte de fixation 20 au moyen d'un écrou de blocage 50, lequel est vissé du côté extérieur sur la deuxième portion 30 de la douille 24, à l'opposé de l'écrou d'ajustage 36.

Sur la figure 3, le premier sous-ensemble 23 est monté fixe en porte-à-faux sur la patte de fixation 20, et est prêt à recevoir le deuxième sous-ensemble 52 adjacent.

Le deuxième sous-ensemble 52 est pourvu du moyeu 12 de support de la roue, ayant à ses extrémités opposées deux logements 54, 56 annulaires de réception de roulement à billes 58, 60, encadrant une embase 62 intermédiaire tubulaire, dont le diamètre interne de l'alésage 64 est inférieur à celui des logements 54, 56. La périphérie du moyeu 12 comporte une surface centrale 66 sensiblement incurvée, notamment de forme ellipsoïdale, située entre deux épaulements 68, 70 servant de support aux rayons de la roue. Chaque roulement à billes 58, 60 comprend une rangée de billes à contact oblique, mais il est clair que tout autre type de roulement peut être utilisé.

Un deuxième moyen de transmission 72 du type mâle est vissé coaxialement dans le logement 56 du moyeu 12, en venant en engagement contre le roulement 60. Ce deuxième moyen de transmission 72 comporte une glissière mâle 74 de forme conjuguée à la glissière femelle 48 du premier moyen de transmission 44.

Le moyeu 12 est fixé à la patte de fixation 18 de gauche par l'intermédiaire d'un tube 76 métallique fixe ayant une forme allongée, de section cylindrique, traversant axialement les roulements 58, 60 et la surface centrale 62. Un épaulement 78 du tube 76 prend appui sur le roulement 60 et est séparé du deuxième moyen de transmission 72 par un jeu radial 80 autorisant la rotation du moyeu 12 par rapport au tube 76 fixe.

A l'opposé de l'épaulement 78, l'extrémité du tube 78 est engagée partiellement dans un orifice 82 de la patte 18. Le serrage des roulements 58, 60 intervient grâce à un écrou de retenue 84 susceptible d'être vissé sur une partie filetée du tube 78. Un contre-écrou 86 est intercalé entre l'écrou de retenue 84 et la face interne de la patte de fixation 18.

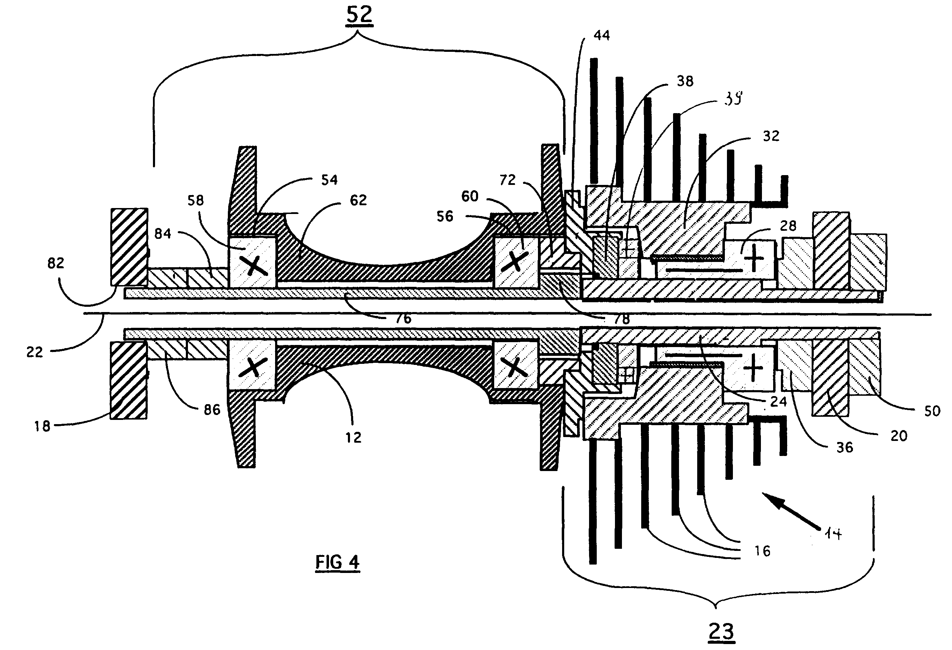

Sur la figure 4, le montage de la roue s'opère par l'introduction du deuxième sous-ensemble 52 entre le manchon d'accouplement 46 du premier sousensemble 23, et la patte de fixation 18, suivie de l'engagement des deux moyens de transmission 44, 72, et de l'insertion du tube 76 dans l'orifice 82 de la patte de fixation 18. Le tube 76 du deuxième sous-ensemble 52 et la douille 24 du premier sous-ensemble 23 se trouvent alors sensiblement en aboutement et en alignement axial, avec accouplement direct des deux moyens de transmission 44, 72.

En référence à la figure 1, le blocage final de la roue intervient ensuite au moyen d'une broche 88 de maintien traversant le tube 76 et la douille 24 le long de la direction transversale de l'axe 22. L'extrémité de droite de la broche 88 est serrée manuellement du côté de la patte de fixation 20 avec un écrou 90 à blocage rapide, tandis que l'extrémité de gauche est bloquée du côté de la patte 18 opposée par un organe de fixation rapide 92, par exemple à manette excentrique.

Le démontage et le remplacement de la roue interviennent dans l'ordre inverse, après le retrait de la broche de maintien 88. Il suffit d'interrompre la liaison mécanique entre les deux moyens de transmission 44, 72 par un simple mouvement de retrait provoquant le dégagement de la glissière mâle 74. Le deuxième sous-ensemble 52 avec la roue peut être facilement démonté, tandis que le premier sous-ensemble 23 de la roue libre 14 reste en place sur la patte de fixation 20. Le mouvement de retrait pour désaccoupler la liaison mécanique intervient dans la direction d'extension des rainures des pattes 18, 20 de fixation de cadre.

L'interruption de l'accouplement mécanique entre les deux moyens de transmission 44, 72 des deux sous-ensembles 23, 52 permet de faciliter le montage et le démontage de la roue, en laissant en place la roue libre d'entraînement 14, et la chaîne de transmission et sans devoir détendre le dérailleur, ni écarter les pattes de fixation 18, 20.

Il est clair que les moyens de réglage pour le positionnement axial et radial des différents organes du dispositif de transmission 10 peuvent être agencés différemment sans sortir du cadre de l'invention. Les moyens de transmission 44, 72 mâle et femelle peuvent également être réalisés par d'autres liaisons mécaniques à emmanchement démontable, ou assemblages glissants à glissières prismatiques.

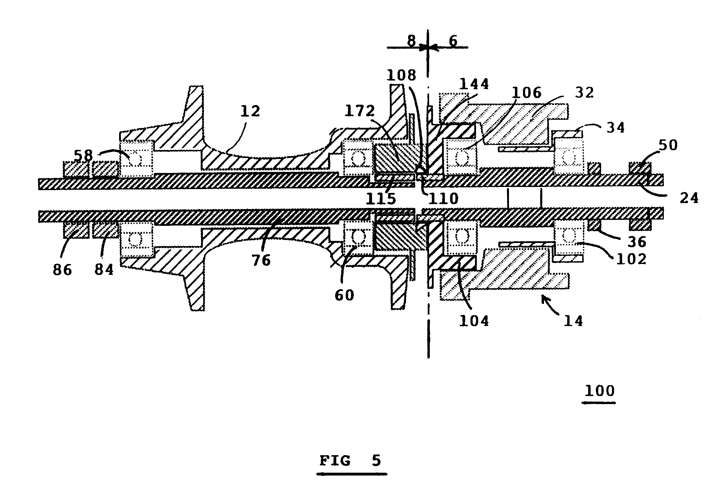

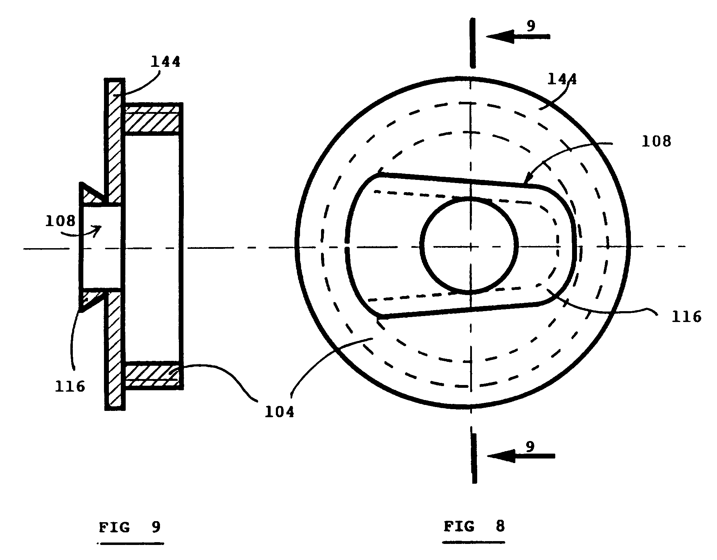

Dans la variante du dispositif d'entraînement 100 de la figure 5, les mêmes repères seront utilisés pour désigner des pièces identiques ou similaires à celles du dispositif 10 de la figure 1. Les éléments de transmission mâle et femelle ont été inversés, et le roulement combiné à aiguilles 28 a été remplacé par un premier roulement à billes 102 standard, associé à la bague 34 intermédiaire pour adapter le corps 32 de la roue libre 14 au diamètre extérieur du roulement 102. Le premier moyen de transmission 144 comporte une protubérance 104 annulaire qui s'emmanche sur la cage extérieure du deuxième roulement 106, et portant du côté opposé l'élément de transmission mâle 108, qui sera décrit par la suite en référence aux figures 8 et 9. Une première bague de fixation 110 est vissée sur l'extrémité de la douille de support 24 pour assurer le positionnement axial du roulement 106.

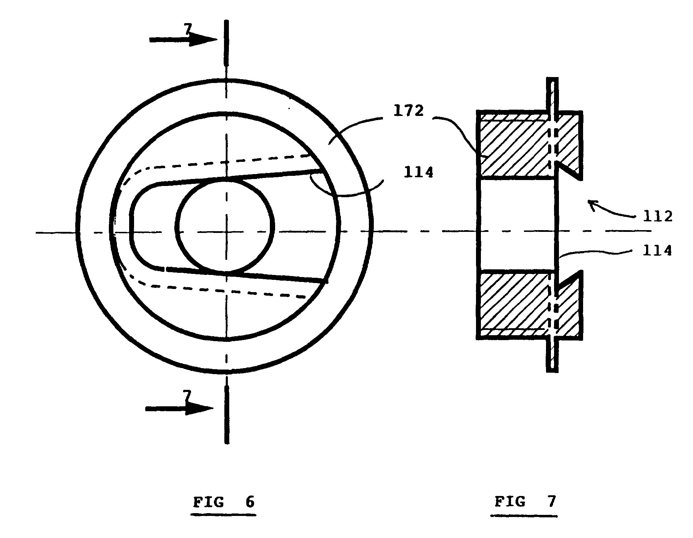

Le deuxième moyen de transmission 172 associé au moyeu 12 porte l'élément de transmission femelle 112, représenté en détail sur les figures 6 et 7, et comprenant une glissière 114 semi-ouverte, à section en queue d'aronde croissante. La périphérie annulaire est filetée de manière à être solidarisée au moyeu 12 par vissage. Une deuxième bague de fixation 115 est vissée sur l'extrémité du tube 76 pour le positionnement axial du roulement 60.

Sur les figures 8 et 9, l'élément de transmission mâle 108 est formé par un tenon 116 de forme conjuguée à celle de la glissière 114. L'insertion du tenon 116 dans la glissière 114 s'effectue par un simple mouvement d'emmanchement dirigé perpendiculairement à l'axe 22 du moyeu 12, et dans la direction des rainures des pattes de fixation 18, 20. La course d'emmanchement correspond sensiblement à la longueur des rainures des pattes de fixation 18, 20.

## Revendications

1. Dispositif d'entraînement (10, 100) de la roue motrice d'un cycle, notamment une bicyclette, comprenant :
- un moyeu (12) de support de la roue, lequel est agencé sur un tube (76) fixe par l'intermédiaire de roulements (58, 60) pour constituer un deuxième sous-ensemble (52) porté par une patte (18) de fixation du cadre,
- une roue libre (14) d'entrainement du moyeu (12), ladite roue libre (14) étant formée par un corps (32) annulaire monté coaxialement par rapport à l'axe du moyeu (12), et comportant sur la surface périphérique une série de pignons (16) coopérant avec une chaîne de transmission, le corps (32) de la roue libre (14) étant monté sur une douille de support (24) tubulaire par l'intermédiaire d'un roulement (28) pour former un premier sous-ensemble (23) solidarisé à l'autre patte (20) de fixation du cadre,
- et des moyens d'assemblage du dispositif d'entraînement (10, 100) aux pattes de fixation (18, 20) du cadre,
caractérisé en ce que le corps (32) de la roue libre (14) est équipé d'un premier moyen de transmission (44, 144) coopérant par emmanchement démontable avec un deuxième moyen de transmission (72, 172) du moyeu (12) pour accoupler ou désaccoupler la liaison mécanique entre la roue libre (14) et le moyeu (12), respectivement lors du montage ou du démontage du deuxième sous-ensemble (52), les premier et deuxième moyens de transmission (44, 144; 72, 172) comportant des éléments de transmission mâle (74, 108) et femelle (48, 112) de formes conjuguées, et que la course d'emmanchement ou de désaccouplement s'effectue perpendiculairement à l'axe (22) de la roue, et selon la direction des rainures des pattes de fixation (18, 20), et sans écartement desdites pattes.

2. Dispositif d'entraînement selon la revendication 1, caractérisé en ce que les éléments de transmission mâle (74, 108) et femelle (48, 112) sont formés par des tenons et glissières à sections en queue d'aronde.

3. Dispositif d'entraînement selon la revendication 2, caractérisé en ce que l'élément de transmission femelle (112) comprend une glissière (114) semiouverte, à section croissante dans le sens du dégagement correspondant au désaccouplement de la liaison mécanique.

4. Dispositif d'entraînement selon la revendication 1, caractérisé en ce que le tube (76) du deuxième sous-ensemble (52) et la douille (24) du premier sous-ensemble (23) se trouvent en alignement axial lorsque les premier et deuxième moyens de transmission (24, 72) sont en position accouplée, une broche (88) de maintien traversant le tube (76) et la douille (24) pour le blocage final de la roue.

5. Dispositif d'entraînement selon la revendication 1, caractérisé en ce que le premier sous-ensemble (23) comporte des moyens de positionnement radial et axial de la roue libre (14), respectivement par rapport à la douille de support (24), et à la face interne de la patte de fixation (20), et un écrou de blocage (50) vissé sur la douille (24) contre la face externe de la patte de fixation (20).

6. Dispositif d'entraînement selon la revendication 5, caractérisé en ce que les moyens de positionnement comportent :
- un écrou d'ajustage (36) vissé sur la douille (24) entre la face interne de la patte de fixation (20) et le roulement (28),
- et un écrou de serrage (38) coopérant avec le corps (32) par l'intermédiaire d'un organe de roulement (39) pour assurer à la fois le blocage axial du roulement (28) en appui contre l'écrou d'ajustage (36), et le positionnement axial de l'extrémité (40) de la douille (24) du côté du premier moyen de transmission (44).

7. Dispositif d'entraînement selon la revendication 1, caractérisé en ce que le tube (76) du deuxième sous-ensemble (52) est équipé d'un épaulement (78) prenant appui sur le roulement 60, ledit épaulement étant séparé du deuxième moyen de transmission (72) par un jeu radial (80) autorisant la rotation du moyeu (12) par rapport au tube (76) fixe.

8. Dispositif d'entraînement selon la revendication 1, caractérisé en ce qu' une bague (34) intermédiaire d'adaptation est insérée entre un premier roulement à billes (102) et le corps de la roue libre (14), le positionnement axial du deuxième roulement à billes (106) étant assuré par une première bague de fixation (110) vissée sur l'extrémité de la douille de support (24).

## Claims

1. A drive device (10, 100) of the drive wheel of a cycle, particularly of a bicycle, comprising :
- a wheel support hub (12), which is arranged on a fixed tube (76) by means of bearings (58, 60) to form a second sub-assembly (52) supported by a frame mounting bracket (18),
- a freewheel (14) for driving the hub (12), said freewheel (14) being formed by an annular body (32) mounted coaxially with respect to the axis of the hub (12), and comprising on the peripheral surface a series of cogs (16) cooperating with a transmission chain, the body (32) of the freewheel (14) being mounted on a tubular support sleeve (24) by means of a bearing (28) to form a first sub-assembly (23) secured to the other frame mounting bracket (20),
- and means for assembling the drive device (10, 100) to the frame mounting brackets (18, 20),
characterized in that the body (32) of the freewheel (14) is equipped with a first transmission means (44, 144) cooperating by disengageable insertion with a second transmission means (72, 172) of the hub (12) to couple or uncouple the mechanical link between the freewheel (14) and the hub (12) when the second sub-assembly (52) is respectively fitted or removed, the first and second transmission means (44, 144; 72, 172) comprising male (74, 108) and female (48, 112) transmission members of conjugate shapes, wherein the engagement or uncoupling travel takes place perpendicularly to the axis (22) of the wheel and in the direction of the grooves of the fixing brackets (18, 20), and without pushing back said brackets.

2. The drive device according to claim 1, characterized in that the male (74, 108) and female (48, 112) transmission members are formed by tenons and slides with dovetailed cross sections.

3. The drive device according to claim 2, characterized in that the female transmission member (112) comprises a semi-open slide (114) of increasing cross-section in the direction of disengagement corresponding to uncoupling of the mechanical link.

4. The drive device according to claim 1, characterized in that the tube (76) of the second sub-assembly (52) and the sleeve (24) of the first sub-assembly (23) are in axial alignment when the first and second transmission means (24, 72) are in the coupled position, a securing spindle (88) passing through the tube (76) and sleeve (24) for final locking of the wheel.

5. The drive device according to claim 1, characterized in that the first subassembly (23) comprises means for radial and axial positioning of the freewheel (14) respectively with respect to the support sleeve (24) and to the internal face of the mounting bracket (20), and a binding nut (50) screwed onto the sleeve (24) against the external face of the mounting bracket (20).

6. The drive device according to claim 5, characterized in that the positioning means comprise:
- an adjusting nut (36) screwed onto the sleeve (24) between the internal face of the mounting bracket (20) and the bearing (28),
- and a lock nut (38) cooperating with the body (32) by means of a bearing component (39) to achieve both axial locking of the bearing (28) against the adjusting nut (36) and axial positioning of the end (40) of the sleeve (24) on the side where the first transmission (44) means is located.

7. The drive device according to claim 1, characterized in that the tube (76) of the second sub-assembly (52) is equipped with a shoulder (78) pressing against the bearing (60), said shoulder being separated from the second transmission means (72) by a radial clearance (80) allowing rotation of the hub (12) with respect to the fixed tube (76).

8. The drive device according to claim 1, characterized in that an intermediate adapter ring (34) is inserted between a first ball-bearing (102) and the body of the freewheel (14), axial positioning of the second ball-bearing (106) being performed by a first fixing ring (110) screwed onto the end of the support sleeve (24).

## Patentansprüche

1. Antriebseinrichtung (10, 100) des Antriebsrads eines Rads, insbesondere eines Fahrrads, mit:
- einer Tragnabe (12) des Rads, welche auf einem festen Rohr (76) mit Hilfe von Kugellagern (58, 60) angeordnet ist, um eine zweite Untereinheit (52) zu bilden, die von einer Befestigungsklemme (18) des Rahmens getragen wird,
- einem Freilaufrad (14) für den Antrieb der Nabe (12), wobei das genannte Freilaufrad (14) von einem ringförmigen Körper (32) gebildet wird, der in Bezug auf die Achse der Nabe (12) koaxial gelagert ist, und auf der umliegenden Oberfläche eine Reihe von Ritzel (16) aufweist, die mit einer Übersetzungskette zusammenarbeiten, wobei der Körper (32) des Freilaufrads (14) auf einer rohrförmigen Traghülse (24) mittels eines Kugellagers (28) gelagert ist, um eine erste Untereinheit (23) zu bilden, die mit der anderen Befestigungsklemme (20) des Rahmens verbunden ist,
- und Verbindungsmitteln der Antriebseinrichtung (10, 100) mit den Befestigungsklemmen (18, 20) des Rahmens,
dadurch gekennzeichnet, dass der Körper (32) des Freilaufrads (14) mit einem ersten Übersetzungsmittel (44, 144) versehen ist, das durch abnehmbares Einstecken mit einem zweiten Übersetzungsmittel (72, 172) der Nabe (12) zusammenarbeitet, um die mechanische Verbindung zwischen dem Freilaufrad (14) und der Nabe (12) bei der Montage bzw. dem Abbau der zweiten Untereinheit (52) zu kuppeln oder zu entkuppeln, wobei die ersten und zweiten Übersetzungsmittel (44, 144; 72, 172) eingreifende (74, 108) und aufnehmende (48, 112) Übersetzungselemente von konjugierten Formen aufweisen, und dass die Einsteckbewegung oder die Entkupplungsbewegung senkrecht zu der Achse (22) des Rads erfolgt, und gemäss der Richtung der Rillen der Befestigungsklemmen (18, 20) und ohne Spreizen der genannten Klemmen.

2. Antriebseinrichtung, gemäss Anspruch 1, dadurch gekennzeichnet, dass die eingreifenden (74, 108) und aufnehmenden (48, 112) Übersetzungselemente von Zapfen und Führungen mit Schwalbenschwanz-Schnitt gebildet werden.

3. Antriebseinrichtung gemäss Anspruch 2, dadurch gekennzeichnet, dass das aufnehmende Übersetzungselement (112) eine halb offene Führung (114) aufweist, mit zunehmendem Durchschnitt in die Freisetzungs-Richtung, was der Entkupplung der mechanischen Verbindung entspricht.

4. Antriebseinrichtung gemäss Anspruch 1, dadurch gekennzeichnet, dass das Rohr (76) der zweiten Untereinheit (52) und die Hülse (24) der ersten Untereinheit (23) axial mit einander ausgerichtet sind, wenn die ersten und zweiten Übersetzungsmittel (24, 72) in gekuppelter Lage sind, wobei ein Haltungs-Stift (88) das Rohr (76) und die Hülse (24) für die Endblockierung des Rads durchquert.

5. Antriebseinrichtung gemäss Anspruch 1, dadurch gekennzeichnet, dass die erste Untereinheit (23) radiale und axiale Positionierungsmittel des Freilaufrads (14) aufweist, in Bezug auf die Traghülse (24) bzw. die Innenseite der Befestigungsklemme (20) und eine Blockierungs-Mutter (50), die auf der Hülse (24) gegen die Aussenseite der Befestigungsklemme (20) geschraubt ist.

6. Antriebseinrichtung gemäss Anspruch 5, dadurch gekennzeichnet, dass die Positionierungsmittel aufweisen:
- eine Einstell-Mutter (36), die auf die Hülse (24) zwischen der Innenseite der Befestigungsklemme (20) und dem Kugellager (28) geschraubt ist,
- und eine Klemm-Mutter (38), die mit dem Körper (32) zusammenarbeitet mittels eines Kugellagerteils (39), um gleichzeitig die axiale Blockierung des Kugellagers (28) gegen die Einstell-Mutter (36) und die axiale Positionierung des Endes (40) der Hülse (24) auf der Seite des ersten Übersetzungsmittels (44) zu gewährleisten.

7. Antriebseinrichtung gemäss Anspruch 1, dadurch gekennzeichnet, dass das Rohr (76) der zweiten Untereinheit (52) mit einem Vorsprung (78) versehen ist, der sich auf das Kugellager (60) stützt, wobei der genannte Vorsprung von dem zweiten Übersetzungsmittel (72) durch ein radiales Spiel (80) getrennt ist, was die Drehung der Nabe (12) in Bezug auf das feste Rohr (76) erlaubt.

8. Antriebseinrichtung gemäss Anspruch 1, dadurch gekennzeichnet, dass ein Zwischen-Anpassungsring (34) zwischen einem ersten Kugellager (102) und dem Körper des Freilaufrads (14) eingefügt ist, wobei die axiale Positionierung des zweiten Kugellagers (106) durch einen ersten Befestigungsring (110) gewährleistet wird, der auf das Ende der Traghülse (24) geschraubt ist.
